# EUROPEAN PATENT APPLICATION

(11) **EP 4 819 520 A1**
(43) Date of publication of application: **07.10.2026**
(21) Application number: 24918893.9
(22) Date of filing: 19.01.2024
(51) Int. Cl.: H04L 1/18, H04L 5/00

(54) **METHOD AND DEVICE FOR PROCESSING RETRANSMISSION FOR CONTROLLING INTERFERENCE IN WIRELESS COMMUNICATION SYSTEM**

(71) Applicant: Samsung Electronics Co., Ltd., Suwon-si, Gyeonggi-do 16677 (KR)
(72) Inventor: KIM, Sundo, Suwon-si, Gyeonggi-do 16677 (KR); YOON, Hyunsik, Suwon-si, Gyeonggi-do 16677 (KR); LEE, Seunghyun, Suwon-si, Gyeonggi-do 16677 (KR)
(74) Representative: Nederlandsch Octrooibureau
(86) International application number: PCT/KR2024/000981
(87) International publication number: WO 2025/154858

(57) **Abstract**

The present disclosure relates to a method and device for processing retransmission for controlling interference between a base station and a terminal in a wireless communication system. According to one embodiment of the present disclosure, the method comprises the steps of: transmitting, from a base station to a terminal, first downlink control information (DCI) and a transport block (TB); transmitting, to the terminal, a transport block (TB) on the basis of the first DCI; receiving hybrid automatic repeat request (HARQ) feedback from the terminal when the transmission of the transport block fails; and retransmitting, to the terminal, the transport block on the basis of the HARQ feedback.

## Description

### [Technical Field]

The present disclosure relates to a wireless communication system. More particularly, the present disclosure relates to a method and apparatus for processing retransmission for controlling interference between a base station and a terminal in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultrahigh-performance communication and computing resources.

In addition, sidelink communication using 5G communication systems is being researched. It is expected that the sidelink communication will be applied to, for example, vehicle-to-everything (V2X) and public safety networks, thereby providing various services to users.

In particular, there is a demand for methods utilizing sidelink relays that can support expanded service coverage, improved reliability of data transmission, and reduced power consumption of terminals.

### [Disclosure of Invention]

### [Technical Problem]

The present disclosure is directed to providing a device and method capable of providing retransmission with effective interference control by reflecting different channel characteristics for each slot in a wireless communication system.

The technical problems to be achieved by the present disclosure are not limited to the above-described technical problems. That is, other technical problems that are not described may be obviously understood by those skilled in the art to which the present disclosure pertains from the following description.

### [Solution to Problem]

To solve the above problems, according to an aspect of the present disclosure, a method performed by a base station in a wireless communication system includes: transmitting, to a terminal, first downlink control information (DCI) and a transport block (TB); transmitting, to the terminal, the transport block (TB) based on the first DCI; receiving, from the terminal, hybrid automatic repeat request (HARQ) feedback when the transmission of the transport block fails; and retransmitting, to the terminal, the transport block based on the HARQ feedback, in which the first downlink control information includes at least one of a slot number counting period, a retransmission time domain resource coefficient, and redundancy version (RV) information for retransmission.

In an embodiment, the method further includes transmitting a radio resource control (RRC) message including a maximum configured number of times of retransmission related to the RV information for the retransmission and an RV sequence according to the number of times of retransmission.

In an embodiment, the method further includes transmitting, to the terminal, second downlink control information based on the HARQ feedback, in which the second downlink control information includes only time domain resource assignment and frequency domain resource assignment.

In an embodiment, slots having similar channel conditions are grouped based on at least one of signal to interference plus noise ratio (SINR), channel quality information (CQI), and modulation and coding scheme (MCS), and the transport block is retransmitted within the same group.

In an embodiment, the first downlink control information further includes group information and slot information for the group.

In addition, according to another embodiment of the present disclosure, a method performed by a terminal in a wireless communication system includes: receiving, from a base station, first downlink control information (DCI); receiving, from the base station, a transport block (TB) based on the first DCI; transmitting, to the base station, hybrid automatic repeat request (HARQ) feedback when the reception of the transport block fails; and re-receiving, from the base station, the transport block based on the HARQ feedback, in which the first downlink control information includes at least one of a slot number counting period, a retransmission time domain resource coefficient, and redundancy version (RV) information for retransmission.

In addition, according to still another embodiment of the present disclosure, a base station in a wireless communication system includes: a transceiver capable of transmitting and receiving at least one signal; and a control unit connected to the transceiver, in which the control unit is configured to: transmit, to a terminal, first downlink control information (DCI) and a transport block (TB); transmit, to the terminal, the transport block (TB) based on the first DCI; receive, from the terminal, hybrid automatic repeat request (HARQ) feedback when the transmission of the transport block fails; and retransmit, to the terminal, the transport block based on the HARQ feedback, and the first downlink control information includes at least one of a slot number counting period, a retransmission time domain resource coefficient, and redundancy version (RV) information for retransmission.

In addition, according to still yet another embodiment of the present disclosure, a terminal in a wireless communication system includes: a transceiver transmitting and receiving at least one signal; and a control unit connected to the transceiver, in which the control unit is configured to: receive, from a base station, first downlink control information (DCI); receive, from the base station, a transport block (TB) based on the first DCI; transmit, to the base station, hybrid automatic repeat request (HARQ) feedback when the reception of the transport block fails; and re-receive, from the base station, the transport block based on the HARQ feedback, and the first downlink control information includes at least one of a slot number counting period, a retransmission time domain resource coefficient, and redundancy version (RV) information for retransmission.

### [Advantageous Effects of Invention]

According to an embodiment of the present disclosure, it is possible to provide a device and method capable of providing retransmission with effective interference control by reflecting different channel characteristics for each slot in a wireless communication system.

Effects which may be achieved by the present disclosure are not limited to the above-described effects. That is, other effects that are not mentioned may be obviously understood by those skilled in the art to which the present disclosure pertains from the following description.

### [Brief Description of Drawings]

FIG. 1 is a diagram illustrating a basic structure of a time-frequency domain in LTE.
FIG. 2 is a diagram illustrating a downlink control channel in LTE.
FIG. 3 is a diagram illustrating transmission resources of the downlink control channel in 5G.
FIG. 4 is a diagram illustrating an example of a configuration for a control resource set in 5G.
FIG. 5 is a diagram illustrating an embodiment of a configuration for a downlink RB structure in 5G.
FIG. 6 is a diagram illustrating a slot structure according to an example of a TDD configuration.
FIG. 7 is a diagram illustrating an example of average channel conditions for each slot number when there is a transmission constraint according to an embodiment of the present disclosure.
FIG. 8 is a diagram illustrating an example of a conventional retransmission process.
FIG. 9 is a diagram illustrating an example of the average channel condition and similar channel conditions for each slot number according to an embodiment of the present disclosure.
FIG. 10 is a diagram illustrating another embodiment of the present disclosure.
FIG. 11 is a diagram illustrating another embodiment of the present disclosure.
FIG. 12 is a diagram illustrating another embodiment of the present disclosure.
FIG. 13 is a diagram illustrating another embodiment of the present disclosure.
FIG. 14 is a diagram illustrating another embodiment of the present disclosure.
FIG. 15 is a diagram illustrating another embodiment of the present disclosure.
FIG. 16 is a diagram illustrating a structure of a terminal according to an embodiment of the present disclosure.
FIG. 17 is a diagram illustrating a structure of a base station according to an embodiment of the present disclosure.

### [Mode for Disclosure]

With the advancement of the wireless communication systems as described above, various services may be provided. Accordingly, measures are required to smoothly provide these services. In particular, there is a need for a communication method that saves terminal power and a channel state information reporting method that takes into account such power saving, in order to provide services to users for a longer period of time.

Hereinafter, embodiments of the present disclosure will be described in detail with reference to the accompanying drawings.

In describing the embodiments, descriptions of technical contents that are well known in the technical field to which the present disclosure pertains and are not directly related to the present disclosure will be omitted. This is to more clearly convey the gist of the present disclosure without ambiguity by omitting unnecessary explanations. Further, the following terms are terms defined in consideration of the functions in the present disclosure and may vary depending on the intention, practice, etc., of users and operators. Therefore, the definitions thereof should be construed based on the contents throughout the specification.

For the same reason, some components in the accompanying drawings are exaggerated, omitted, or schematically illustrated. In addition, the size of each component does not entirely reflect the actual size. The same reference numerals are assigned to the same or corresponding components in each drawing.

Advantages and features of the present disclosure and methods accomplishing the same will become apparent from the following detailed description of embodiments with reference to the accompanying drawings. However, the present disclosure is not limited to embodiments to be described below, but may be implemented in various different forms. These embodiments of the present disclosure will be provided only in order to make the present disclosure complete and allow those skilled in the art to completely recognize the scope of the present disclosure, and the present disclosure will be defined by the scope of the claims. Throughout the specification, like reference numerals denote like components.

In this case, it will be appreciated that each block of processing flowcharts and combinations of the flowcharts may be executed by computer program instructions. Since these computer program instructions may be mounted in a processor of a general-purpose computer, a special-purpose computer, or other programmable data processing apparatuses, these computer program instructions executed through the processor of the computer or other programmable data processing apparatuses create means performing functions described in a block(s) of the flowchart. These computer program instructions may also be stored in a computer-usable or computer-readable memory that can direct a computer or other programmable data processing apparatus to function in a particular manner, thereby causing the instructions stored in the computer-usable or computer-readable memory to produce an article of manufacture including instruction means that implement the functions described in the flowchart block(s). Since the computer program instructions may also be mounted on the computer or the other programmable data processing apparatuses, the instructions performing a series of operation steps on the computer or the other programmable data processing apparatuses to create processes executed by the computer, thereby executing the computer or the other programmable data processing apparatuses may also provide steps for performing the functions described in a block(s) of the flowchart.

In addition, each block may represent some of modules, segments, or codes including one or more executable instructions for executing a specific logical function(s). Further, it is to be noted that, in some alternative embodiments, the functions described in the blocks can occur out of sequence. For example, two blocks that are continuously illustrated may be simultaneously performed in fact or be performed in a reverse sequence depending on corresponding functions.

In this case, the term '~unit' used in the present embodiment means software or hardware components such as field programmable gate array (FPGA) or application specific integrated circuit (ASIC), and the '~unit' performs certain roles. However, the '~unit' is not meant to be limited to the software or hardware. The '~unit' may be configured to be stored in a storage medium that can be addressed or may be configured to reproduce one or more processors. Accordingly, according to some embodiments, the '~unit' includes components such as software components, object-oriented software components, class components, and task components, processes, functions, attributes, procedures, subroutines, segments of program code, drivers, firmware, microcode, circuits, data, databases, data structures, tables, arrays and variables. Components and functions provided within '~unit' may be combined into a smaller number of components and '~unit' or may be further separated into additional components and '~unit'. In addition, components and '~ units' may be implemented to reproduce one or more CPUs in a device or a secure multimedia card. In addition, according to some embodiments, the '~unit' may include one or more processors.

Hereinafter, an operation principle of the present disclosure will be described in detail with reference to the accompanying drawings. When it is determined that the detailed description of the known arts or configurations related to the present disclosure may unnecessarily obscure the gist of the present disclosure, the detailed description thereof will be omitted. Further, the following terms are terms defined in consideration of the functions in the present disclosure and may vary depending on the intention, practice, etc., of users and operators. Therefore, the definitions thereof should be construed based on the contents throughout the specification. Hereinafter, a base station is an entity that performs resource assignment of a terminal, and may be at least one of a gNode B, an eNode B, a Node B, a base station (BS), a radio access unit, a base station controller, or a node on a network. The terminal may include user equipment (UE), a mobile station (MS), a cellular phone, a smartphone, a computer, or a multimedia system capable of performing a communication function. Of course, the present disclosure is not limited to the above examples. Hereinafter, the present disclosure describes a technology for a terminal to receive broadcast information from a base station in a wireless communication system. The present disclosure relates to a communication technique and a system for converging a 5th generation (5G) communication system with Internet of Things (IoT) technology to support higher data transmission rates beyond 4th generation (4G) systems. The present disclosure may be applied to intelligent services (e.g., smart homes, smart buildings, smart cities, smart cars or connected cars, healthcare, digital education, retail, security and safety-related services, etc.) based on 5G communication technology and IoT-related technology.

Terms used in the following description, such as those referring to broadcast information, control information, communication coverage, state changes (e.g., events), network entities, messages, and components of a device, are presented as examples for convenience of description. Accordingly, the present disclosure is not limited to terms described below, and other terms having equivalent technical meanings may be used.

For convenience of description below, some terms and names defined in the 3rd generation partnership project long term evolution (3GPP LTE) standard may be used. However, the present disclosure is not limited to the terms and names, and may be equally applied to systems conforming to other standards.

Wireless communication systems have evolved from their initial voice-centric services to broadband wireless communication systems that provide high-speed, high-quality packet data services, such as communication standards including 3GPP's high speed packet access (HSPA), long term evolution (LTE) (or evolved universal terrestrial radio access (E-UTRA)), LTE-advanced (LTE-A), LTE-Pro, 3GPP2's high rate packet data (HRPD), ultra mobile broadband (UMB), IEEE's 802.16e, etc.

As a representative example of these broadband wireless communication systems, for the LTE system, orthogonal frequency division multiplexing (OFDM) is employed in downlink (DL) and single carrier frequency division multiple access (SC-FDMA) is employed in uplink (UL). The uplink refers to a wireless link through which a terminal (user equipment (UE) or mobile station (MS)) transmits data or control signals to a base station (eNode B or base station (BS)), and the downlink refers to a wireless link through which a base station transmits data or control signals to a terminal. The multiple access scheme as described above assigns and operates time-frequency resources to carry and transmit data or control information to each user so that the time-frequency resources do not overlap, i.e., orthogonality is ensured, thereby allowing the data or control information of each user to be distinguished.

The future communication systems beyond LTE, that is, the 5G communication systems should be able to freely reflect various requirements of users and service providers. Therefore, services satisfying various requirements should be supported. The services being considered for the 5G communication systems include enhanced mobile broadband (eMBB), massive machine type communication (mMTC), ultra reliability low latency communication (URLLC), etc.

According to some embodiments, the eMBB aims to provide a data transmission rate that is even higher than that supported by existing LTE, LTE-A, or LTE-Pro. For example, in the 5G communication system, the eMBB should be able to provide a peak data rate of 20 Gbps in the downlink and a peak data rate of 10 Gbps in the uplink from the viewpoint of a one base station. At the same time, the 5G communication system should provide an increased actual user perceived data rate for a UE. To meet these requirements, there is a need to improve transmission and reception technologies, including more enhanced multi-input multi-output (MIMO) transmission technology. In addition, by using a bandwidth wider than 20 MHz in a frequency band of 3 to 6 GHz or 6 GHz or higher instead of the 2 GHz band currently used in LTE, the data transmission rate required by the 5G communication system may be satisfied.

Simultaneously, the mMTC is being considered to support application services such as the Internet of Things (IoT) in the 5G communication systems. To efficiently provide the IoT, the mMTC may require support for access of a large number of UEs within a cell, enhanced UE coverage, enhanced battery life, and reduced UE costs, etc. The IoT is attached to various sensors and devices to provide communication functions, and therefore, should be able to support a large number of UEs (e.g., 1,000,000 UEs/km²) within a cell. In addition, due to the nature of services, the UE supporting the mMTC is highly likely to be located in shadow areas, such as basements of buildings where cells may not cover. Therefore, the UE may require even wider coverage than other services provided by the 5G communication systems. The UE supporting the mMTC should be configured to be low-cost UE, and since it is difficult to frequently replace the battery of the UE, a very long battery life time may be required.

Finally, URLLC is as a cellular-based wireless communication service used for mission-critical purposes, such as remote control of robots or machinery, industrial automation, unmanned aerial vehicles, remote health care, and emergency alert, and should provide communication that provides ultra-low latency and ultra-reliability. For example, services supporting the URLLC should satisfy air interface latency less than 0.5 milliseconds, and at the same time, has requirements of a packet error rate (PER) of 10⁻⁵ or less. Therefore, for the services supporting the URLLC, the 5G system should provide a shorter transmit time interval (TTI) than other services, and at the same time, require design specifications that assign wider resources in the frequency band. However, the above-described mMTC, URLLC, and eMBB are merely examples of different service types, and the service types to which the present disclosure is applied are not limited to the examples described above.

The services considered in the 5G communication system described above should be provided while being converged with each other based on a one framework. That is, for efficient resource management and control, it is preferable that the each service is controlled and transmitted as being integrated into a one system rather than being operated independently.

In addition, although embodiments of the present disclosure are described below using LTE, LTE-A, LTE Pro, or NR systems as one example, embodiments of the present disclosure may also be applied to other communication systems having similar technical backgrounds or channel types. In addition, the embodiment of the present disclosure may be applied to other communication systems through certain modifications, as determined by those skilled in the art, without significantly departing from the scope of the present disclosure.

The frame structure of the LTE and LTE-A systems will be described in more detail below with reference to the drawings.

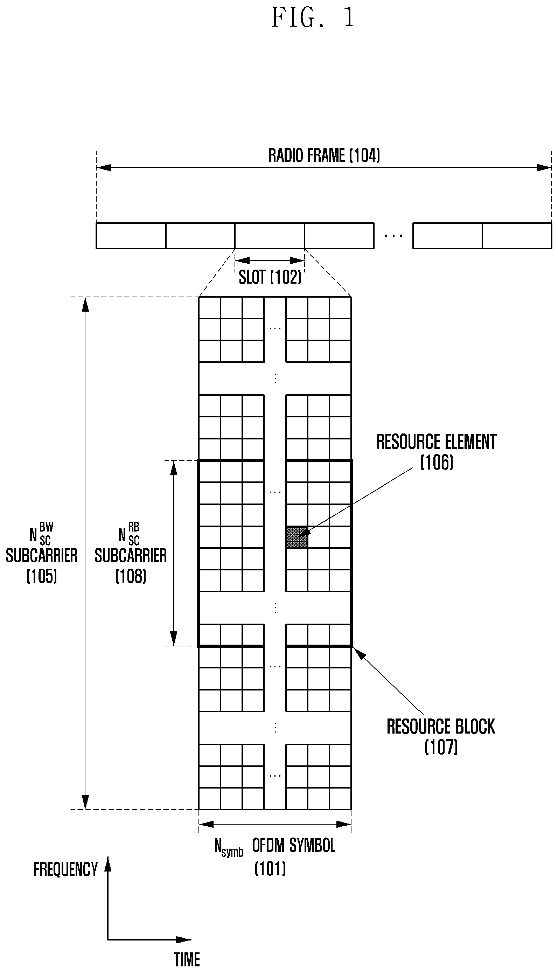

FIG. 1 is a diagram illustrating a basic structure of a time-frequency domain in LTE. Specifically, FIG. 1 is a diagram illustrating the basic structure of the time-frequency domain that is a radio resource domain in which the data or control channel is transmitted in the LTE system.

In FIG. 1, a horizontal axis represents a time domain, and a vertical axis represents a frequency domain. A minimum transmission unit in the time domain is an OFDM symbol 101, where N_{symb} OFDM symbols 101 are combined to constitute one slot 102, and two slots are combined to constitute one subframe 103. A duration of the slot 102 is 0.5 ms, and a duration of the subframe 103 is 1.0 ms. The radio frame 104 is a time domain unit composed of 10 subframes 103. The minimum transmission unit in the frequency domain is a subcarrier 105, and a bandwidth of the entire system transmission is composed of a total of N_{BW} subcarriers 105.

In the time-frequency domain, a basic unit of a resource is a resource element (RE) 106, and the resource element may be represented by an OFDM symbol index and a subcarrier index. A resource block (RB or physical resource block (PRB)) 107 is defined as N_{symb} consecutive OFDM symbols 101 in the time domain and N_{RB} consecutive subcarriers 108 in the frequency domain. Accordingly, one RB 107 is composed of N_{symb} × N_{RB} REs 106. Generally, the minimum transmission unit of data is the above-described RB unit. In the LTE system, generally N_{symb} = 7, N_{RB}=12 and, N_{BW} and N_{RB} are proportional to a bandwidth of the system transmission.

Next, downlink control information (DCI) in the LTE and LTE-A systems will be described in detail.

In the LTE system, scheduling information for downlink data or uplink data is delivered from the base station to the UE via the DCI. The DCI may include information regarding whether the DCI is scheduling information for uplink data or scheduling information for downlink data, whether the DCI is compact DCI having a small control information size, whether spatial multiplexing using multiple antennas is applied, whether the DCI is DCI for power control, and the like. Additionally, a DCI format defined according to the above-described pieces of information may be applied and operated. For example, DCI format 1, which is the scheduling control information for the downlink data, is configured to include at least the following control information:
- Resource assignment type 0/1 flag: It notifies whether a resource assignment scheme is type 0 or type 1. The type 0 allocates resources in units of resource block groups (RBGs) by applying a bitmap scheme. In the LTE system, the basic unit of the scheduling is the resource block (RB) that is represented as a time and frequency domain resource, and the RBG is composed of a plurality of RBs, and becomes the basic unit of the scheduling in a type 0 scheme. The type 1 causes a specific RB to be assigned within the RBG.
- Resource block assignment: It notifies the RB assigned for data transmission. The represented resources are determined based on the system bandwidth and resource assignment scheme.
- Modulation and coding scheme (MCS): It notifies a modulation scheme used for data transmission and a transport block size of data to be transmitted.
- HARQ process number: It notifies a process number of hybrid automatic repeat and request (HARQ).
- New data indicator: It notifies whether it is a HARQ initial transmission or a retransmission.
- Redundancy version (RV): It notifies the redundancy version of the HARQ.
- Transmit power control (TPC) command for physical uplink control channel (PUCCH): It notifies a transmit power control command for PUCCH, which is an uplink control channel.

The DCI undergoes channel coding and modulation processes and is transmitted on a physical downlink control channel (PDCCH), which is a downlink physical control channel.

A cyclic redundancy check (CRC) is attached to a DCI message payload, and the CRC is scrambled by a radio network temporary identifier (RNTI) that corresponds to a UE's identity. Different RNTIs are used depending on the purpose of the DCI message, such as UE-specific data transmission, power control commands, or random access responses. In other words, the RNTI is not explicitly transmitted, but is included in a CRC calculation process and transmitted. When receiving the DCI message transmitted on the PDCCH, the UE confirms the CRC using the assigned RNTI. When the CRC confirmation result is correct, the UE may know that the corresponding message has been transmitted to the UE.

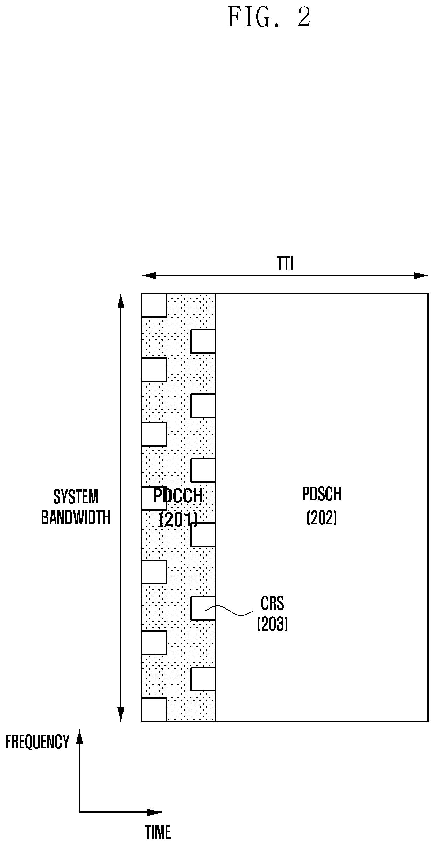

FIG. 2 is a diagram illustrating a downlink control channel in LTE. Specifically, FIG. 2 is a diagram illustrating the PDCCH, which is the downlink physical channel via which the LTE DCI is transmitted.

Referring to FIG. 2, a PDCCH 201 is time-multiplexed with a physical downlink shared channel (PDSCH) 202, which is the data transmission channel, and is transmitted across the entire system bandwidth. A region of the PDCCH 201 is represented by the number of OFDM symbols, which is indicated to the UE by a control format indicator (CFI) transmitted on a physical control format indicator channel (PCFICH).

By assigning the PDCCH 201 to the OFDM symbols that come at the beginning of the subframe, the UE may decode the downlink scheduling assignment as quickly as possible. This has the advantage of reducing the decoding delay for a downlink shared channel (DL-SCH), i.e., the overall downlink transmission delay.

Since one PDCCH carries one DCI message and a plurality of UEs may be scheduled simultaneously on the downlink and uplink, a plurality of PDCCH transmissions occur simultaneously within each cell. A cell-specific reference signal (CRS) 203 is used as a reference signal for decoding the PDCCH 201. The CRS 203 is transmitted over the entire band for every subframe, and scrambling and resource mapping vary according to a cell identity (ID). Since the CRS 203 is a reference signal used in common by all UEs, UE-specific beamforming may not be used. Therefore, the multiple antenna transmission technique for the LTE PDCCH is limited to open-loop transmission diversity. The number of ports of the CRS is implicitly known to the UE from the decoding of the physical broadcast channel (PBCH).

The resource assignment for the PDCCH 201 is based on control-channel elements (CCE), and one CCE consists of 9 resource element groups (REGs), i.e., a total of 36 resource elements (REs). The number of CCEs required for the specific PDCCH 201 may be 1, 2, 4, or 8, which varies depending on a channel coding rate of a DCI message payload. Such different numbers of CCEs are used to implement link adaptation for the PDCCH 201.

The UE should detect signals without knowing the information for the PDCCH 201. For blind decoding in LTE, a search space representing a set of CCEs was defined. The search space is composed of a plurality of sets at an aggregation level (AL) of each CCE, which is not explicitly signaled but is implicitly defined through a function and subframe number based on the UE identity. Within each subframe, the UE decodes the PDCCH 201 for all possible resource candidates that may be generated from CCEs within a configured search space, and processes information declared to be valid for the UE through CRC checking.

The search space is classified into a UE-specific search space and a common search space. A certain group of UEs or all UEs may search the common search space of the PDCCH 201 to receive cell-common control information, such as dynamic scheduling or a paging message for the system information. For example, the scheduling assignment information of the DL-SCH for the transmission of system information block (SIB)-1, which includes cell operator information, etc., may be received by searching the common search space of the PDCCH 201.

In LTE, the entire PDCCH region is composed of the set of CCEs in a logical region, and a search space composed of the set of CCEs exists. The search space is divided into the common search space and the UE-specific search space, and the search space for the LTE PDCCH is defined as follows.

| |
|---|
| The set of PDCCH candidates to monitor are defined in terms of search spaces, where a search space ${S}_{k}^{\left(L\right)}$ at aggregation level *L* ∈ {1,2,4,8} is defined by a set of PDCCH candidates. For each serving cell on which PDCCH ${S}_{k}^{\left(L\right)}$ is monitored, the CCEs corresponding to PDCCH candidate m of the search space ${S}_{k}^{\left(L\right)}$ are given by |
| $L \left\{\left({Y}_{k}-m′\right)mod\left⌊{N}_{CCE , k}/L\right⌋\right\} - i$ |
| where *Y_{λ}* is defined below, *i* - 0,··· ,*L* - 1*.* For the common search space *m*' - *m*. For the PDCCH UE specific search space, for the serving cell on which PDCCH is monitored, if the monitoring UE is configured with carrier indicator field then *m'* = *m + M*^{(*L*)} ·*n_{CI}* where *n_{CI}* is the carrier indicator field value, else if the monitoring UE is not configured with carrier indicator field then *m'* - *m* where *m* = 0,···, *M*^{(*L*)}-1. *M*^{(*L*)} is the number of PDCCH candidates to monitor in the given search space. |
| Note that the carrier indicator field value is the same as *ServCellIndex* |
| For the common search spaces, Σ_{λ} is set to 0 for the two aggregation levels *L*=4 and *L*=8*.* |
| For the UE-specific search space ${S}_{k}^{\left(L\right)}$ at aggregation level *L ,* the variable Σ_{λ} is defined by |
| ${Y}_{k} = \left(A⋅{Y}_{k - 1}\right) mod D$ |
| where Σ₋₁ = *n*_{RNTI} ≠ 0, *A* = 39827, *D*=65537 and $k = \left⌊{n}_{s}/2\right⌋$, *n*_{S} is the slot number within a radio frame. The RNTI value used for *n*_{RNTI} is defined in subclause 7.1 in downlink and subclause 8 in uplink. |

According to the definition of the search space for the PDCCH described above, the UE-specific search space is not explicitly signaled but is implicitly defined through a function and subframe number based on the UE identity. In other words, since the UE-specific search space may change according to the subframe number, this implies that the UE-specific search space may change over time, thereby addressing the problem (blocking problem) in which a specific UE is unable to use the search space due to other UEs among UEs.

According to an embodiment, when any UE is not be scheduled in the corresponding subframe since all CCEs that a specific UE is searching are already being used by other UEs scheduled within the same subframe, such a problem may not occur in the next subframe since the search space changes over time. For example, even when a portion of the UE-specific search space of UE #1 and UE #2 overlaps in a specific subframe, he overlap in the next subframe can be expected to be different because the UE-specific search space varies on a per-subframe basis.

According to the definition of the search space for the PDCCH described above, the common search space is defined as a set of pre-arranged CCEs, since a certain group of UEs or all UEs should receive the PDCCH. In other words, the common search space does not vary based on the UE's identity, the subframe number, etc. Although the common search space exists for the transmission of various system messages, it may also be used to transmit control information for individual UEs. In this way, the common search space may also be used as a solution to the phenomenon where a UE is not scheduled due to a lack of available resources in the UE-specific search space.

The search space is a set of candidate control channels composed of CCEs that a UE should attempt to decode at a given aggregation level. Since there are various aggregation levels that form 1, 2, 4, or 8 CCEs as one group, a UE has a plurality of search spaces. The number of PDCCH candidates that a UE should monitor within the search space, which is defined by the aggregation level in LTE PDCCH, is defined by the table below.

**[Table 1]**

| Search space ${S}_{k}^{\left(L\right)}$ | | | Number of PDCCH candidates *M*^{(*L*)} |
|---|---|---|---|
| Type | Aggregation level *L* | Size [in CCEs] | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

According to [Table 1], the UE-specific search space supports aggregation levels {1, 2, 4, 8}. In this case, each aggregation level has {6, 6, 2, 2} PDCCH candidates. The common search space supports aggregation levels {4, 8}. In this case, each aggregation level has {4, 2} PDCCH candidates. The reason the common search space supports only the aggregation levels {4, 8} is to improve coverage characteristics, since system messages generally need to reach cell edges.

The DCI transmitted to the common search space is defined only for specific DCI formats such as 0/1A/3/3A/1C that correspond to purposes such as the system message or power control for a UE group. Within the common search space, the DCI formats having spatial multiplexing are not supported. The downlink DCI format that should be decoded in the UE-specific search space varies depending on a transmission mode configured for the corresponding UE. Since the transmission mode is configured via radio resource control (RRC) signaling, an exact subframe number is not designated to determine whether the corresponding configuration is effective for the corresponding UE. Therefore, the UE may operate to prevent communication loss by always performing decoding for DCI format 1A regardless of the transmission mode.

The downlink control channel, the method for transmitting and receiving downlink control information, and the search space in the conventional LTE and LTE-A were described above.

The downlink control channel in the 5G communication system, which is being discussed currently, will be described in more detail below with reference to the drawings.

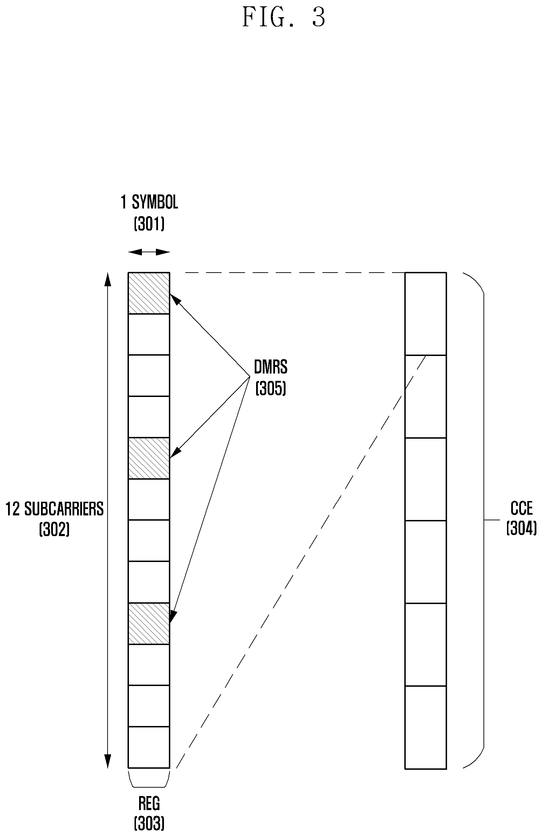

FIG. 3 is a diagram illustrating transmission resources of the downlink control channel in 5G. Specifically, FIG. 3 is a diagram illustrating an example of the basic unit of time and frequency resources constituting the downlink control channel in 5G.

Referring to FIG. 3, a resource element group (REG) 303, which is the basic unit of the time and frequency resources constituting the control channel, is composed of one OFDM symbol 301 on a time axis and 12 subcarriers 302, i.e., 1 resource block (RB), on a frequency axis. By assuming the basic unit of the time axis as the one OFDM symbol 301 when constituting the basic unit of the control channel, the data channel and the control channel may be time-multiplexed within one subframe. By locating the control channel before the data channel, the user's processing time may be reduced, making it easier to satisfy latency requirements. By configuring the basic unit of the frequency axis of the control channel as the one RB 302, the frequency multiplexing between the control channel and the data channel may be performed more efficiently.

By concatenating the REG 303 illustrated in FIG. 3, control channel regions having various sizes may be configured. For example, when the basic unit to which the downlink control channel is assigned in 5G is called a control channel element (CCE) 304, one CCE 304 may be composed of the plurality of REGs 303. Describing the REG 303 illustrated in FIG. 3 as an example, the REG 303 may be composed of 12 REs. When the one CCE 304 is composed of six REGs 303, it indicates that the one CCE 304 may be composed of 72 REs. When a downlink control resource set is configured, the corresponding region may be composed of the plurality of CCEs 304, and a specific downlink control channel may be mapped to one or more CCEs 304 according to the aggregation level (AL) within the control resource set and transmitted. The CCEs 304 within the control resource set are identified by numbers. In this case, the numbers may be assigned according to a logical mapping scheme.

The basic unit of the downlink control channel illustrated in FIG. 3, i.e., the REG 303 may include both the REs to which the DCI is mapped and REs to which the demodulation reference signal (DMRSs) 305, which are reference signals for decoding the REs, are mapped. As illustrated in FIG. 3, the DMRS 305 may be transmitted from three REs within the one REG 303. For reference, since the DMRS 305 is transmitted using the same precoding as the control signal mapped within the REG 303, the UE may decode the control information without having information regarding which precoding the base station has applied.

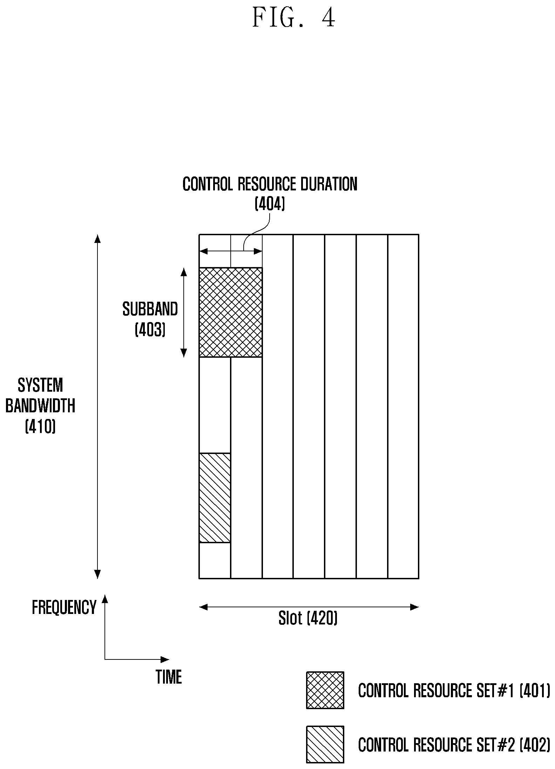

FIG. 4 is a diagram illustrating an example of a configuration for a control resource set in 5G. Specifically, FIG. 4 is a diagram illustrating an example of the control resource set (CORESET) in which the downlink control channel is transmitted in the 5G wireless communication system.

An example in FIG. 4 is a case where one slot is assumed to be seven OFDM symbols. FIG. 4 illustrates an example in which two control resource sets (control resource set #1 401 and control resource set #2 402) are configured within a system bandwidth 410 on a frequency axis and within one slot 420 on a time axis. The frequency of the control resource sets 401 and 402 may be configured to be a specific subband 403 within the entire system bandwidth 410. The time duration of the control resource sets 401 and 402 may be configured to be one or more OFDM symbols, and the time duration of the control resource sets 401 and 402 may also be defined as a control resource duration 404. In an example of FIG. 4, the control resource set #1 401 is configured with a control resource set duration of two symbols, and the control resource set #2 402 is configured with a control resource set duration of one symbol.

In the above-described 5G, the control resource set may be configured for a UE by a base station via a higher layer signaling (e.g., system information, a master information block (MIB), RRC signaling). Configuring the control resource set for the UE means providing information such as the location of the control resource set, subband, resource assignment of the control resource set, and the duration of the control resource set. For example, pieces of information in Table 2may includes.

**[Table 2]**

| |
|---|
| - Configuration information 1. Frequency axis RB assignment information |
| - Configuration information 2. Control resource set start symbol |
| - Configuration information 3. Control resource set symbol duration |
| - Configuration information 4. REG bundling size (2 or 3 or 6) |
| - Configuration information 5. Transmission mode (Interleaved transmission scheme or Non-interleaved transmission scheme) |
| - Configuration information 6. DMRS configuration information (Precoder granularity) |
| - Configuration information 7. Search space type (Common search space, Group-common search space, UE-specific search space) |
| - Configuration information 8. DCI format to be monitored in corresponding control resource set |
| - Others |

The configuration information in [Table 2] is an example of the present disclosure, and in addition to the configuration information in [Table 2], various types of information necessary for transmitting the downlink control channel may be configured for the UE.

Next, the downlink control information (DCI) in 5G will be described in detail.

In the 5G system, the scheduling information for the uplink data (physical uplink shared channel (PUSCH)) or the downlink data (physical downlink shared channel (PDSCH)) is delivered from the base station to the UE via the DCI.

The UE may monitor fallback and non-fallback DCI formats for the PUSCH or PDSCH. The fallback DCI format may be composed of fixed fields between the base station and the UE, and the non-fallback DCI format may include a configurable field.

According to an embodiment of the present disclosure, the fallback DCI for scheduling the PUSCH may include the pieces of information of [Table 3].

**[Table 3]**

| |
|---|
| - Identifier for DCI formats - [1] bit |
| - Frequency domain resource assignment - $\left[\left⌈{log}_{2}\left({N}_{RB}^{UL , BWP}\left({N}_{RB}^{UL , BWP}+1\right)/2\right)\right⌉\right]$ bits |
| - Time domain resource assignment - X bits |
| - Frequency hopping flag - 1 bit. |
| - Modulation and coding scheme - [5] bits |
| - New data indicator - 1 bit |
| - Redundancy version - [2] bits |
| - HARQ process number - [4] bits |
| - TPC command for scheduled PUSCH - [2] bits |
| - UL/SUL indicator - 0 or 1 bit |

According to an embodiment of the present disclosure, the non-fallback DCI for scheduling the PUSCH may include the pieces of information of [Table 4].

**[Table 4]**

| | |
|---|---|
| - Carrier indicator - 0 or 3 bits | |
| - Identifier for DCI formats - [1] bits | |
| - Bandwidth part indicator - 0, 1 or 2 bits | |
| - Frequency domain resource assignment | |
| | • For resource allocation type 0, $\left⌈{N}_{RB}^{UL , BWP}/P\right⌉$ bits |
| | • For resource allocation type 1, $\left⌈{log}_{2}\left({N}_{RB}^{UL , BWP}\left({N}_{RB}^{UL , BWP}+1\right)/2\right)\right⌉$ bits |
| - Time domain resource assignment -1, 2, 3, or 4 bits | |
| - VRB-to-PRB mapping - 0 or 1 bit, only for resource allocation type 1. | |
| | • 0 bit if only resource allocation type 0 is configured; |
| | • 1 bit otherwise. |
| - Frequency hopping flag - 0 or 1 bit, only for resource allocation type 1. | |
| | • 0 bit if only resource allocation type 0 is configured; |
| | • 1 bit otherwise. |
| - Modulation and coding scheme - 5 bits | |
| - New data indicator - 1 bit | |
| - Redundancy version - 2 bits as defined in section x.x of [6, TS38,214] | |
| - HARQ process number - 4 bits | |
| - 1st downlink assignment index - 1 or 2 bits | |
| | • 1 bit for semi-static HARQ-ACK codebook; |
| | • 2 bits for dynamic HARQ-ACK codebook with single HARQ-ACK codebook. |
| - 2nd downlink assignment index - 0 or 2 bits | |
| | • 2 bits for dynamic HARQ-ACK codebook with two HARQ-ACK sub-codebooks; |
| | • 0 bit otherwise. |
| - TPC command for scheduled PUSCH - 2 bits | |
| - SRS resource indicator - $\left⌈{log}_{2}\left({\sum }_{k = 1}^{{L}_{max}} \left(\begin{matrix}{N}_{SRS} \\ k\end{matrix}\right)\right)\right⌉$ or $\left⌈{log}_{2}\left({N}_{SRS}\right)\right⌉$ bits | |
| | • $\left⌈{log}_{2}\left({\sum }_{k = 1}^{{L}_{max}} \left(\begin{matrix}{N}_{SRS} \\ k\end{matrix}\right)\right)\right⌉$ bits for non-codebook based PUSCH transmission; |
| | • $\left⌈{log}_{2}\left({N}_{SRS}\right)\right⌉$ bits for codebook based PUSCH transmission. |
| - Precoding information and number of layers -up to 6 bits | |
| - Antenna ports - up to 5 bits | |
| - SRS request - 2 bits | |
| - CSI request - 0, 1, 2, 3, 4, 5, or 6 bits | |
| - CBG transmission information - 0, 2, 4, 6, or 8 bits | |
| - PTRS-DMRS association - 2 bits. | |
| - beta_offset indicator - 2 bits | |
| - DMRS sequence initialization - 0 or 1 bit | |
| - UL/SUL indicator - 0 or 1 bit | |

According to an embodiment of the present disclosure, the fallback DCI for scheduling the PDSCH may include the pieces of information of [Table 5].

**[Table 5]**

| |
|---|
| - Identifier for DCI formats - [1] bit |
| - Frequency domain resource assignment - $\left[\left⌈{log}_{2}\left({N}_{RB}^{DL , BWP}\left({N}_{RB}^{DL , BWP}+1\right)/2\right)\right⌉\right]$ bits |
| - Time domain resource assignment - X bits |
| - VRB-to-PRB mapping - 1 bit. |
| - Modulation and coding scheme - [5] bits |
| - New data indicator - 1 bit |
| - Redundancy version - [2] bits |
| - HARQ process number - [4] bits |
| - Downlink assignment index - 2 bits |
| - TPC command for scheduled PUCCH - [2] bits |
| - PUCCH resource indicator - [2] bits |
| - PDSCH-to-HARQ feedback timing indicator - [3] bits |

According to an embodiment of the present disclosure, the non-fallback DCI for scheduling the PDSCH may include the pieces of information of [Table 6].

**[Table 6]**

| | |
|---|---|
| - Carrier indicator - 0 or 8 bits | |
| - Identifier for DCI formats - [1] bits | |
| - Bandwidth part indicator - 0, 1 or 2 bits | |
| - Frequency domain resource assignment | |
| | • For resource allocation type 0, $\left⌈{N}_{RB}^{DL , BWP}/P\right⌉$ bits |
| | • For resource allocation type 1, $\left⌈{log}_{2}\left({N}_{RB}^{DL , BWP}\left({N}_{RB}^{DL , BWP}+1\right)/2\right)\right⌉$ bits |
| - Time domain resource assignment -1, 2, 3, or 4 bits | |
| - VRB-to-PRB mapping - 0 or 1 bit, only for resource allocation type 1. | |
| | • 0 bit if only resource allocation type 0 is configured; |
| | • 1 bit otherwise. |
| - PRB bundling size indicator - 1 bit | |
| - Rate matching indicator - 0, 1, 2 bits | |
| - ZP CSI-RS trigger - X bits | |
| For transport block 1: | |
| - Modulation and coding scheme - 5 bits | |
| - New data indicator - 1 bit | |
| - Redundancy version - 2 bits | |
| For transport block 2: | |
| - Modulation and coding scheme - 5 bits | |
| - New data indicator - 1 bit | |
| - Redundancy version - 2 bits | |
| - HARQ process number - 4 bits | |
| - Downlink assignment index - 0 or 4 bits | |
| - TPC command for scheduled PUCCH - 2 bits | |
| - PUCCH resource indicator | |
| - PDSCH-to-HARQ_feedback timing indicator - 3 bits | |
| - Antenna por ts - up to 5 bits | |
| - Transmission configuration indication - 3 bits | |
| - SRS request - 2 bits | |
| - CBG transmission information - 0, 2, 4, 6, or 8 bits | |
| - CBG flushing out information - 0 or 1 bit | |
| - DMRS sequence initialization - 0 or 1 bit | |

The DCI may undergo channel coding and modulation processes and may be transmitted on a physical downlink control channel (PDCCH), which is a downlink physical control channel. The cyclic redundancy check (CRC) is attached to a DCI message payload, and the CRC is scrambled by a radio network temporary identifier (RNTI) that corresponds to a UE's identity.

Different RNTIs are used depending on the purpose of the DCI message, such as UE-specific data transmission, power control commands, or random access responses. In other words, the RNTI is not explicitly transmitted, but is included in a CRC calculation process and transmitted. When a UE receives a DCI message transmitted on the PDCCH, the UE may check the CRC using the assigned RNTI. When the CRC check result is correct, the UE may know that the corresponding message was transmitted to that UE.

For example, the DCI scheduling the PDSCH for system information (SI) can be scrambled by SI-RNTI. The DCI scheduling PDSCH for a random access response (RAR) message may be scrambled by RA-RNTI. The DCI scheduling PDSCH for a paging message may be scrambled by P-RNTI. The DCI notifying a slot format indicator (SFI) may be scrambled by SFI-RNTI. The DCI notifying transmit power control (TPC) may be scrambled by TPC-RNTI. The DCI scheduling the UE-specific PDSCH or PUSCH may be scrambled by cell RNTI (C-RNTI).

When a specific UE receives a scheduling for a data channel, i.e., a PUSCH or PDSCH, on the PDCCH, data is transmitted and received along with DMRS within the corresponding scheduled resource domain.

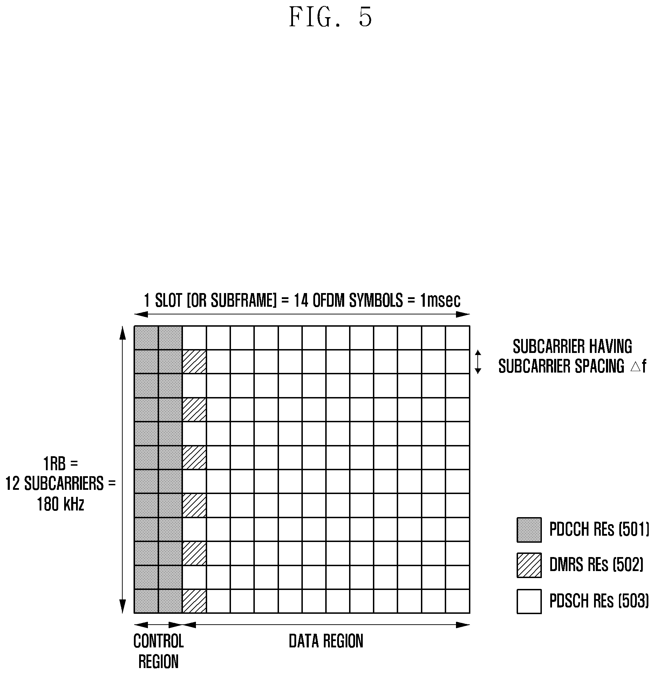

FIG. 5 is a diagram illustrating an example of a configuration for a downlink RB structure in 5G.

More specifically, FIG. 5 illustrates a case where a specific UE uses 14 OFDM symbols as one slot (or subframe) in the downlink, and is configured to transmit the PDCCH with the first two OFDM symbols and the DMRS with the third symbol. In the case of FIG. 5, within a specific RB in which the PDSCH is scheduled, the PDSCH is transmitted by mapping data to REs in which DMRS is not transmitted in the third symbol, and to REs from the fourth to last symbols. A subcarrier spacing Δf illustrated in FIG. 5 is 15 kHz for the LTE/LTE-A systems, and for the 5G system, one of {15, 30, 60, 120, 240, 480} kHz is used.

Meanwhile, as described above, in order to measure a downlink channel state in a cellular system, the base station should transmit a reference signal. In the case of the long term evolution advanced (LTE-A) system of the 3GPP, a UE may measure the channel state between the base station and the UE using CRS or CSI-RS transmitted by the base station.

The channel state should be measured by considering various factors, which may include the amount of interference in the downlink. The amount of interference in the downlink includes interference signals, thermal noise, etc., generated by antennas belonging to adjacent base stations, and the amount of interference in the downlink is important for the UE to determine the channel state of the downlink. For example, when a signal is transmitted from a base station with one transmitting antenna to a UE with one receiving antenna, the UE should determine the Es/Io by determining the energy per symbol that may be received in the downlink from the reference signal received from the base station and the amount of interference that will be received simultaneously during the reception of the corresponding symbol. The determined Es/Io is converted into a data transmission rate or an equivalent value and transmitted to the base station in the form of a channel quality indicator (CQI), which may be used by the base station to determine at what data transmission rate the transmission to the UE is performed.

More specifically, in the case of the LTE-A system, the UE feeds back information regarding the downlink channel state to the base station so that it may be utilized for the downlink scheduling of the base station. That is, the UE measures the reference signal transmitted by the base station over the downlink and feeds back the information extracted therefrom to the base station in the form defined by the LTE/LTE-A standard. As described above, the information fed back by the UE in the LTE/LTE-A may be referred to as channel state information, and the channel state information may include the following three types of information.
- Rank Indicator (RI): The number of spatial layers that the UE may receive in the current channel state
- Precoding matrix indicator (PMI): Indicator of the precoding matrix preferred by the UE in the current channel state.
- Channel quality indicator (CQI): Maximum data rate that the UE may receive in the current channel state.

The CQI may be replaced by a signal to interference plus noise ratio (SINR), a maximum error correction code rate and modulation scheme, data efficiency per frequency, etc., which may be utilized similarly to the maximum data rate.

The RI, PMI, and CQI have meanings associated with each other. For example, the precoding matrix supported in the LTE/LTE-A is defined differently for each rank. Therefore, the PMI value X when the RI has a value of 1 and the PMI value X when the RI has a value of 2 may be interpreted differently.

In addition, as an example, even when a UE determines CQI, it assumes that the PMI value X the UE reported to the base station has been applied by the base station. That is, reporting RI_X, PMI_Y, and CQI_Z by the UE to the base station is equivalent to reporting that the corresponding UE may receive the data transmission rate corresponding to the CQI_Z when the rank is set to RI_X and the PMI is set to PMI_Y. In this way, when calculating the CQI, the UE assumes which transmission scheme the base station will perform, thereby ensuring that optimized performance can be obtained when the actual transmission is performed using the corresponding transmission scheme.

In the LTE/LTE-A, the RI, PMI, and CQI, which are the channel state information fed back by the UE, may be fed back in a periodic or non-periodic form. When the base station intends to acquire the channel state information from a specific UE non-periodically, the base station may be configured to perform non-periodic feedback (or non-periodic channel state information reporting) using the non-periodic feedback indicator (or channel state information request field, channel state information request information) included in the downlink control information (DCI) for the UE. Additionally, when the UE receives the indicator configured for non-periodic feedback in the n-th subframe, it may perform uplink transmission by including the non-periodic feedback information (or channel state information) in the data transmission in the n+k-th subframe. Here, k is a parameter defined in the 3GPP LTE Release l1 standard, which is 4 for frequency division duplexing (FDD) and may be defined as illustrated in [Table 7] for time division duplexing (TDD).

**[Table 7] k values for each subframe number n in TDD UL/DL configuration**

| TDD UL/DL | subframe number *n* | | | | | | | | | |
|---|---|---|---|---|---|---|---|---|---|---|
| Configuration | 0 | 1 | 2 | 3 | 4 | 5 | 6 | 7 | 8 | 9 |
| 0 | - | - | 6 | 7 | 4 | - | - | 6 | 7 | 4 |
| 1 | - | - | 6 | 4 | - | - | - | 6 | 4 | - |
| 2 | - | - | 4 | - | - | - | - | 4 | - | - |
| 3 | - | - | 4 | 4 | 4 | - | - | - | - | - |
| 4 | - | - | 4 | 4 | - | - | - | - | - | - |
| 5 | - | - | 4 | - | - | - | - | - | - | - |
| 6 | - | - | 7 | 7 | 5 | - | - | 7 | 7 | - |

When the non-periodic feedback is configured, the feedback information (or channel state information) includes RI, PMI, and CQI, and depending on the feedback configuration (or channel state reporting configuration), the RI and PMI may not be fed back.

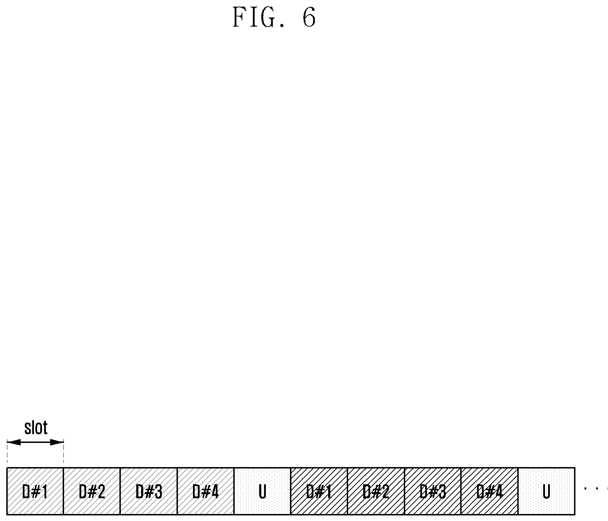

FIG. 6 is a diagram illustrating a slot structure according to an example of a TDD configuration.

More specifically, when a ratio of the number of DL slots to the number of UL slots is approximately 4:1, it may be represented as illustrated in FIG. 6. However, in the case of the DL slot immediately preceding the UL slot, not all symbols may be DL symbols, and the DL slot has at least a guard symbol that considers propagation delivery latency, but for convenience, is referred to as a DL slot in this example.

In addition, as an example, when the DL slots are consecutive, each slot may be distinguished by assigning numbers such as D#1 to D#4, as illustrated in FIG. 6. Similarly, even when the UL slots are consecutive, numbers, etc., may also be assigned to distinguish each consecutive slot. For convenience of description, the present disclosure will be described focusing on the downlink transmission.

The resource assignment at the base station is not based on a fixed scheme but is implementation-dependent. In particular, transmission constraints or rules, etc., may be internally defined for interference control. As an example, the following transmission constraint may be considered.

Each base station may apply the transmission constraint so that it does not perform resource assignment immediately upon data entering its buffer, but starts resource assignment from a specific slot.

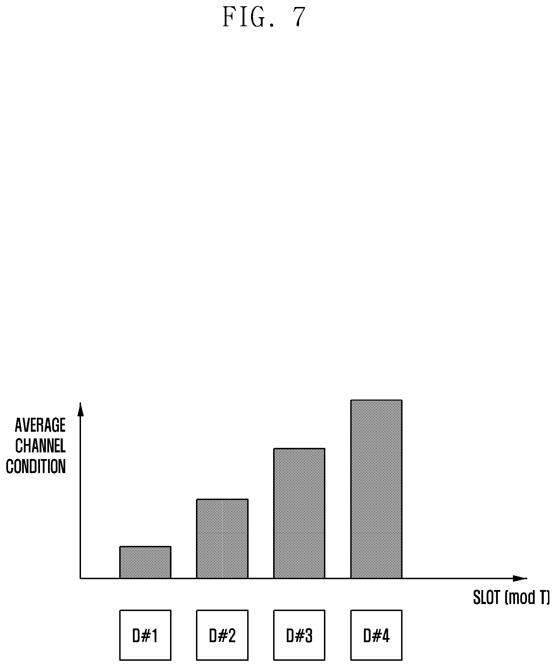

FIG. 7 is a diagram illustrating average channel conditions for each slot number when there is the transmission constraint as in the example described above. The average channel condition represented on a Y-axis may be the average SINR, the average CQI value reported by the UE to the base station, the average MCS value indicating the channel condition of the UE as perceived by the base station, or the like. The number of slots for the resource assignment is determined based on the amount of traffic requested by the UE, and the resource assignment is performed sequentially starting from a specific slot. Therefore, as illustrated in the drawing, slots that are further away from the slot in which resource assignment starts tend to experience less interference, resulting in better channel conditions on average. In other words, a better average channel condition means a higher probability of being assigned a higher MCS.

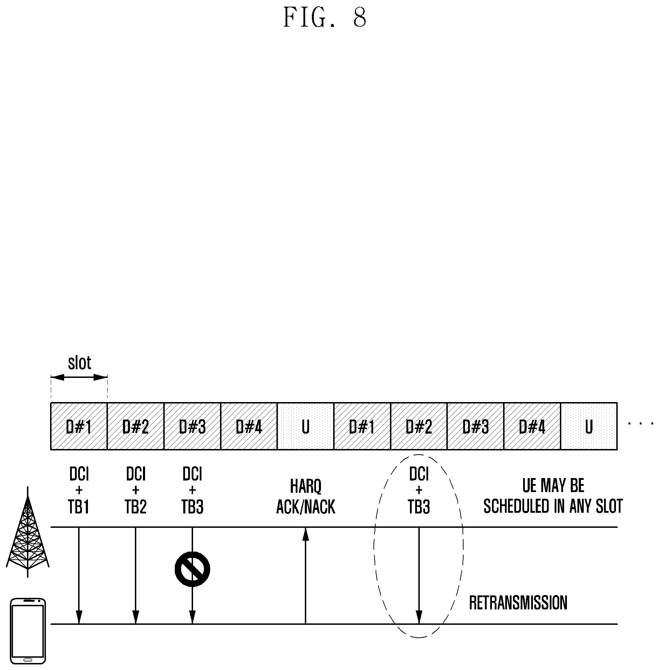

FIG. 8 is a diagram illustrating an example of the conventional retransmission process. Specifically, FIG. 8 is a diagram schematically illustrating a process of performing the retransmission when a specific transmission fails. In the present drawing, for convenience, it is assumed that a TB is transmitted using the PDSCH in the same slot following the DCI transmission on the PDCCH. As illustrated in FIG. 8, when the transmission of the third TB fails and a HARQ NACK is received from the UE, the base station performs retransmission the corresponding TB. In this case, the base station may perform transmission in any slot regardless of a specific slot. It is assumed that, when the transmission is performed in FIG. 8, the channel conditions are indicated as illustrated in FIG. 7. Since the transmission in D#3 exhibits good channel conditions on average, it may have been assigned a high MCS. However, when the corresponding transmission fails, a combining gain is obtained through the retransmission, and through this gain, the probability of success increases. In other words, the channel conditions where the retransmission is performed are also important in order to obtain the combining gain. However, in the channel condition as illustrated in FIG. 7, since the average channel condition in D#2 is worse than that in D#3, even when the combining gain is obtained, it is highly likely that it will still be worse than the average channel condition in D#3. Consequently, even when retransmission is performed, there is still a high probability that the transmission will fail. However, when retransmission is performed in D#3 having similar channel conditions, the probability of success increases by obtaining the combining gain.

In order to solve the problem described above, the present patent proposes a technique for performing retransmission in a slot having similar channel conditions.

Hereinafter, embodiments of the present disclosure will be described in detail with reference to the accompanying drawings. Hereinafter, while the present disclosure is described below using the LTE or LTE-A system as an example, the embodiments of the present disclosure may also be applied to other communication systems having similar technical backgrounds or channel types. For example, the communication systems to which the embodiments of the present disclosure are applied may include 5th generation mobile communication technologies (5G, new radio, NR) developed beyond the LTE-A. Accordingly, the embodiments of the present disclosure may be applied to other communication systems through certain modifications, as determined by those skilled in the art, without significantly departing from the scope of the present disclosure.

In addition, in describing the present disclosure, when it is decided that a detailed description for the functions or configurations related to the present disclosure may unnecessarily obscure the gist of the present disclosure, the detailed description therefor will be omitted. Further, the following terms are terms defined in consideration of the functions in the present disclosure and may vary depending on the intention, practice, etc., of users and operators. Therefore, the definitions thereof should be construed based on the contents throughout the specification.

### <Embodiment 1>

Embodiment 1 describes a method for performing retransmission in a slot having a channel condition similar to the initial transmission when the failed transmission is retransmitted.

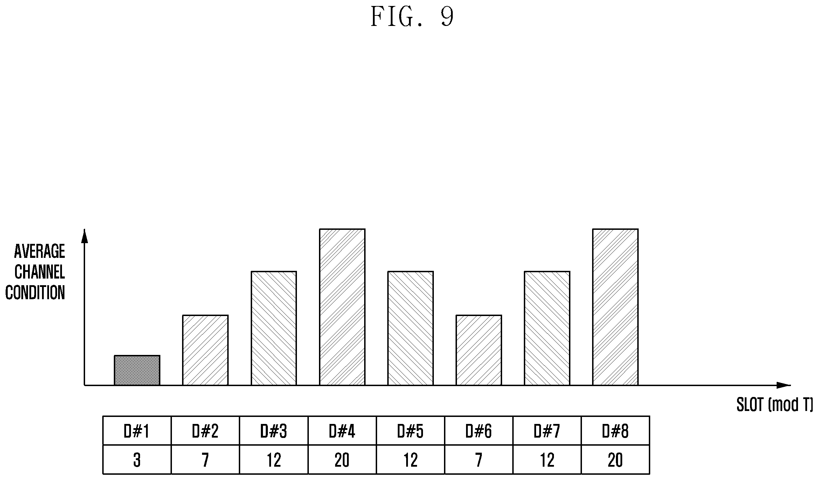

FIG. 9 is a diagram illustrating an example of the average channel condition and similar channel conditions for each slot number according to an embodiment of the present disclosure. FIG. 9 is a diagram illustrating the channel conditions for each slot number similar to FIG. 7. For convenience, it is assumed in the present drawing that slots are managed in units of 8. As illustrated in FIG. 9, slots exhibiting similar average channel conditions may be represented in a similar pattern. Furthermore, when the average channel condition is considered as the average MCS used when the base station assigns resources to the corresponding UE, it may be considered as illustrated in the represented example.

In the present embodiment, when the failed transmission is retransmitted, the retransmission is assigned in the channel condition similar to the initial transmission. For example, when the transmission in D#3 fails, the retransmission for the corresponding data may be performed in D#3 having the same slot number. The corresponding example will be described in more detail in Embodiment 2. As another example, when the transmission in D#3 fails, the retransmission for the corresponding data may be performed in other slots D#5 or D#7 having the channel conditions similar to the corresponding slot including D#3. This example will also be described in more detail in Embodiment 5.

### <Embodiment 2>

Embodiment 2 describes a method for performing retransmission while maintaining the same slot number in performing Embodiment 1.

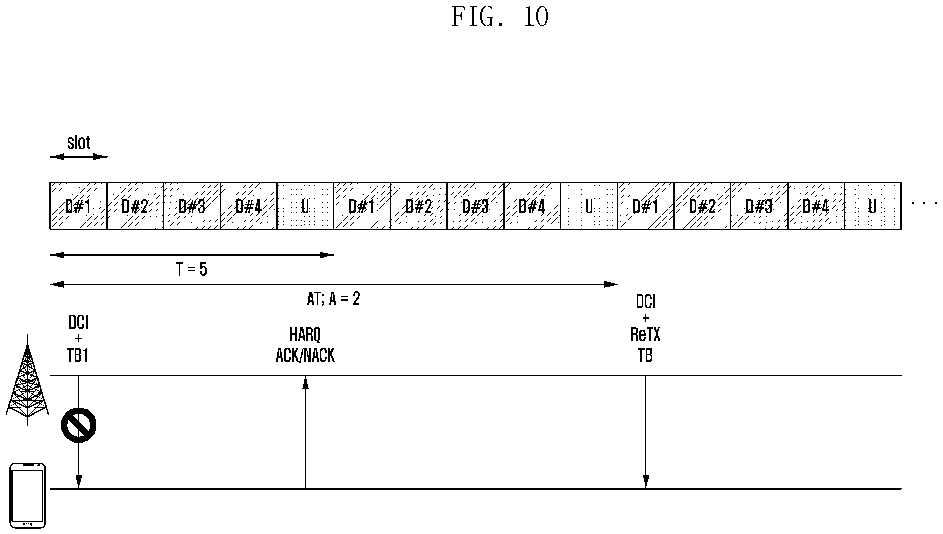

FIG. 10 is a diagram illustrating another embodiment of the present disclosure. Specifically, FIG. 10 is a diagram illustrating an example in which, when the transmission fails in slot D#1 in performing Embodiment 2, the retransmission is performed in D#1 having the same slot number. To assign slot numbers as in FIG. 10, the slot numbers vary depending on how many units the slots are managed in. As illustrated in FIG. 10, a slot count period (represented as T in the drawing, T = 5) is required to manage D#1 to D#4. The slot in which retransmission may be performed may vary depending on the value of the slot count period.

### <Embodiment 3>

Embodiment 3 describes a method for performing retransmission without retransmission scheduling via DCI in performing Embodiment 2.

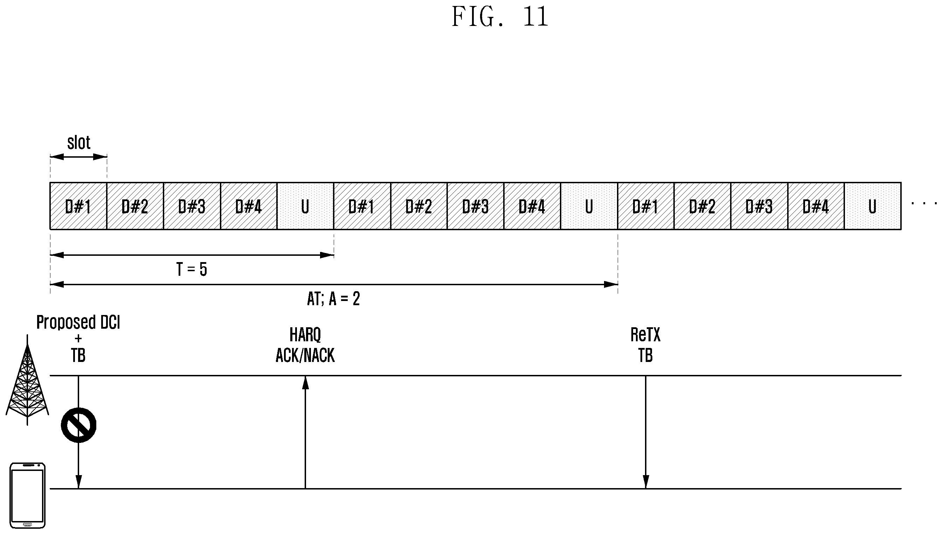

FIG. 11 is a diagram illustrating another embodiment of the present disclosure. Specifically, FIG. 11 is a diagram illustrating an example in which, when transmission fails in slot D#1 in performing Embodiment 3 and retransmission is performed in D#1 having the same slot number, the PDSCH transmission for retransmission is performed without the DCI, using only the DCI transmitted for the initial transmission. In FIG. 11, the DCI proposed in the present disclosure is indicated as "proposed DCI," and it is assumed that it is classified as a separate format from the existing DCI.

In the present embodiment, when the base station assigns resources for retransmission, it is assumed that the resource assignment in the time and frequency axes is the same as that of the initial transmission. The base station performs an operation of assigning retransmission from an announced resource when the UE receives a NACK from the uplink resource transmitting HARQ ACK/NACK information, or when the UE fails to receive a HARQ ACK/NACK.

For the UE to operate as in the present embodiment, the following information is required.
a. Slot count period (e.g., T = 5 in the example of FIG. 10)
b. The location of the slot to which the retransmission is assigned when the initial transmission fails
c. The redundancy version (RV) to be used during the retransmission

The pieces of information as described above may be configured using the RRC or via the DCI. In addition, some of the above pieces of information may be configured via the RRC and some of the pieces of information may be configured via the DCI. For convenience, the present embodiment will only describe the cases where all information is configured via the RRC and where all information is configured via the DCI.
- When configured via the RRC

When configured via the RRC, the information corresponding to a, b, and c may be configured.

The information b may be represented by various schemes. Based on the DCI transmission location, it may notify the total slot duration for the location where retransmission is assigned. This is represented as AT in FIG. 10. Alternatively, since the location where the retransmission is assigned will be multiple of information a, there is a method for configuring a coefficient that enables a UE to calculate in combination with information a. This corresponds to A in FIG. 10. In addition, based on the HARQ ACK/NACK location, similarly to the example in FIG. 10, it may be configured that retransmission is assigned after the BT slot, or only the coefficient B may be configured.

Information c may pre-configure the RV sequence when retransmission is performed. For example, when the retransmission RV is configured to 0231, the UE may identify the RV of the TB being retransmitted by looking at the corresponding information.

When configured via the RRC, an additional field referring to that the corresponding DCI operates as in the present embodiment is required in the DCI. Alternatively, it may operate in the same scheme as the present embodiment only when the RRC value proposed in the present embodiment is configured.
- When configured via the DCI

Similar to the case configured via the RRC, when the information a and b is configured via the DCI, additional fields should be newly defined. When the RRC has preconfigured RV values for all retransmissions, information c may refer to only the RV value corresponding to the immediately next retransmission in a field newly defined via the DCI, and all RVs may be preconfigured and provided as in RRC.

Additional RRC configuration is required to use the proposed DCI as in the present embodiment. Specifically, the additional RRC configuration for the redundancy version sequence for retransmission may be as follows.

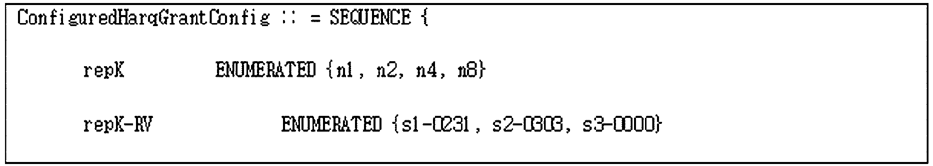

In the above description, repK may refer to the maximum configured number of times of retransmission, and repK-RV may refer to the RV sequence according to the number of times of retransmission. The proposed DCI should newly define a DCI format and deliver to the UE via the RRC configuration that the corresponding format may be transmitted via the search space configuration. When a new DCI format is not defined to use the proposed DCI, there is also a method for utilizing the existing format in terms of the search space, but defining an indicator to use the form of the proposed DCI format and delivering the indicator to the UE via the RRC.

### <Embodiment 4>

Embodiment 4 describes a retransmission method using reduced DCI in performing Embodiment 2.

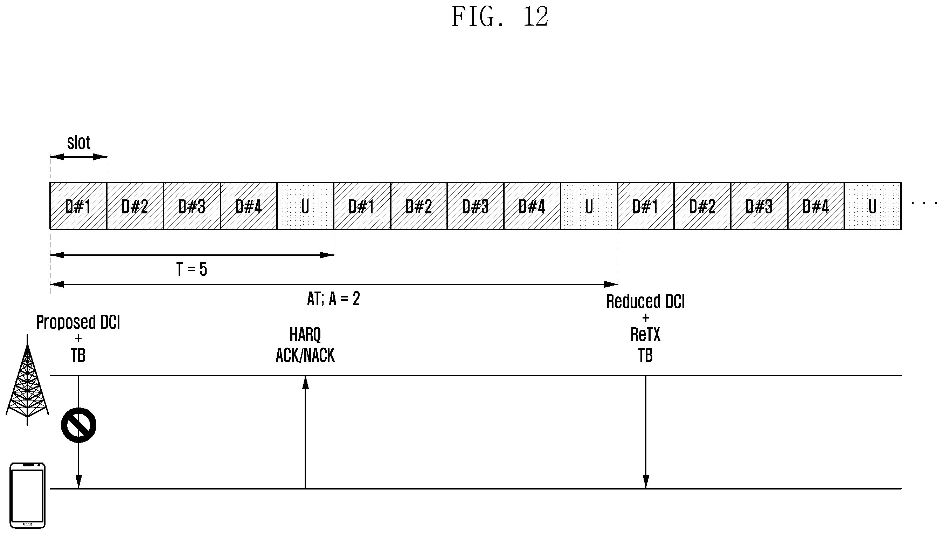

FIG. 12 is a diagram illustrating another embodiment of the present disclosure. Specifically, FIG. 12 is a diagram illustrating an example in which, when transmission fails in slot D#1 in performing Embodiment 3 and retransmission is performed in D#1 having the same slot number, the PDSCH transmission is performed using a proposed DCI for initial transmission and a reduced DCI for retransmission. In FIG. 12, the DCI used for initial transmission assignment proposed in the present disclosure is represented as the proposed DCI, and the DCI used for retransmission assignment is represented as the reduced DCI. It is assumed that both proposed DCIs are classified into formats separate from the transmitted existing DCI, etc., and are named in the above form for convenience.

In the present embodiment, when the base station assigns resources for retransmission, the proposed scheme can also be utilized even when the resource assignment in the time and frequency axes is different from that of the initial transmission. The base station performs an operation of assigning retransmission from an announced resource when the UE receives a NACK from the uplink resource transmitting HARQ ACK/NACK information, or when the UE fails to receive a HARQ ACK/NACK.

For the UE to operate as in the present embodiment, the following information is required as in Embodiment 3, and the UE may recognize that the reduced DCI will be transmitted at the corresponding location.
a. Slot count period (T = 5 in the example of FIG. 10)
b. The location of the slot to which the retransmission is assigned when the initial transmission fails
c. The redundancy version (RV) to be used during the retransmission

The pieces of information as described above may be configured using the RRC or via the DCI. In addition, some of the above pieces of information may be configured via the RRC and some of the pieces of information may be configured via the DCI. For convenience, the present embodiment will only describe the cases where all information is configured via the RRC and where all information is configured via the DCI.
- When configured via the RRC

When configured via the RRC, the information corresponding to a, b, and c may be configured.

The information b may be represented by various schemes. Based on the DCI transmission location, it may notify the total slot duration for the location where retransmission is assigned. This is represented as AT in FIG. 10. Alternatively, since the location where the retransmission is assigned will be multiple of information a, there is a method for configuring a coefficient that enables the UE to calculate in combination with information a. This corresponds to A in FIG. 10. In addition, based on the HARQ ACK/NACK location, similarly to the example in FIG. 10, it may be configured that retransmission is assigned after the BT slot, or only the coefficient B may be configured.

Information c may pre-configure the RV sequence when retransmission is performed. For example, when the retransmission RV is configured to 0231, the UE may identify the RV of the TB being retransmitted by looking at the corresponding information.

When configured via the RRC, an additional field referring to that the corresponding DCI operates as in the present embodiment is required in the DCI. Alternatively, it may operate in the same scheme as the present embodiment only when the RRC value proposed in the present embodiment is configured.
- When configured via the DCI

Similar to the case configured via the RRC, when the information a and b is configured via the DCI, additional fields should be newly defined. When the RRC has preconfigured RV values for all retransmissions, information c may refer to only the RV value corresponding to the immediately next retransmission in a field newly defined via the DCI, and all RVs may be preconfigured and provided as in RRC.

Additional RRC configuration is required to use the proposed DCI as in the present embodiment. Specifically, the additional RRC configuration for the redundancy version sequence for retransmission may be as follows.

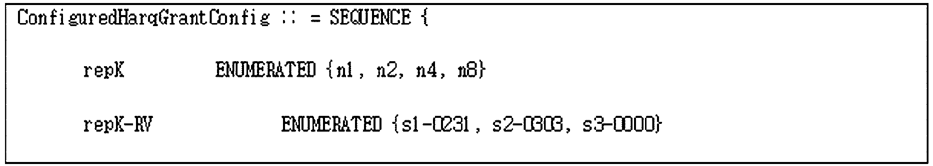

In the above description, repK may refer to the maximum configured number of times of retransmission, and repK-RV may refer to the RV sequence according to the number of times of retransmission. The proposed DCI should newly define a DCI format and deliver to the UE via the RRC configuration that the corresponding format may be transmitted via the search space configuration. When a new DCI format is not defined to use the proposed DCI, there is also a method for utilizing the existing format in terms of the search space, but defining an indicator to use the form of the proposed DCI format and delivering the indicator to the UE via the RRC.

The reduced DCI may include only the time axis resource assignment information and the frequency axis resource assignment information. It is assumed that the UE has received the necessary information from the proposed DCI, as in the previous Embodiment 3. In this case, to perform the retransmission as in the present embodiment, the UE may identify the location of the slot in which the reduced DCI and the retransmission will occur via the proposed DCI. To check the reduced DCI at the corresponding location, a new format should be defined in the RRC. In addition, it should be delivered to the UE via the RRC that the newly defined format via the search space configuration may be delivered on the PDCCH.

In this case, since the reduced DCI includes less information compared to the existing technology, transmission can be performed using minimal PDCCH resources. For example, when N CCEs are required for the existing DCI transmission, M CCEs (M < N) are required for the reduced DCI, so the required amount of resources becomes M/N, and the PDCCH capacity increases by approximately N/M.

### <Embodiment 5>

Embodiment 5 describes a method for performing retransmission by defining a group of slots having similar channel conditions and maintaining the group identically in performing Embodiment 1.

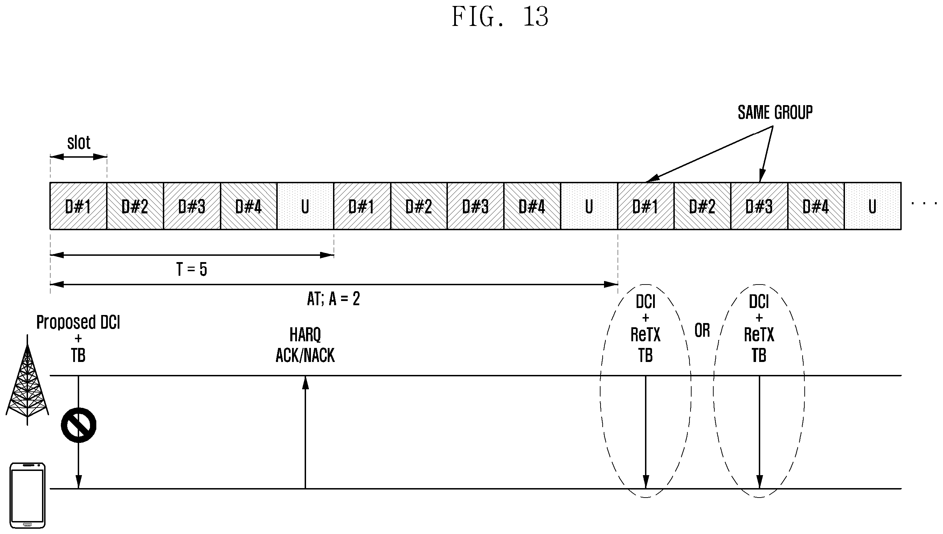

FIG. 13 is a diagram illustrating another embodiment of the present disclosure. Specifically, FIG. 13 is a diagram illustrating an example in which, when transmission fails in slot D#1 in performing Embodiment 5, retransmission is performed in D#1 or D#3 having the same slot number or the same channel condition. To assign slot numbers as in FIG. 13, the slot numbers vary depending on how many units the slots are managed in. In addition, the slot numbers vary depending on the number of slots having similar channel conditions and each slot. Similar to FIG. 10, even in FIG. 13, a slot count period (represented as T in the drawing, T = 5) is required to manage D#1 to D#4. The slot in which retransmission may be performed may vary depending on the value of the slot count period. Furthermore, the slots in which retransmission may be performed vary depending on the slots having similar channel conditions, and for convenience, slots having similar channel conditions are represented in the same form in FIG. 13.

### <Embodiment 6>

Embodiment 6 describes a method for performing retransmission without retransmission scheduling via DCI in performing Embodiment 5.

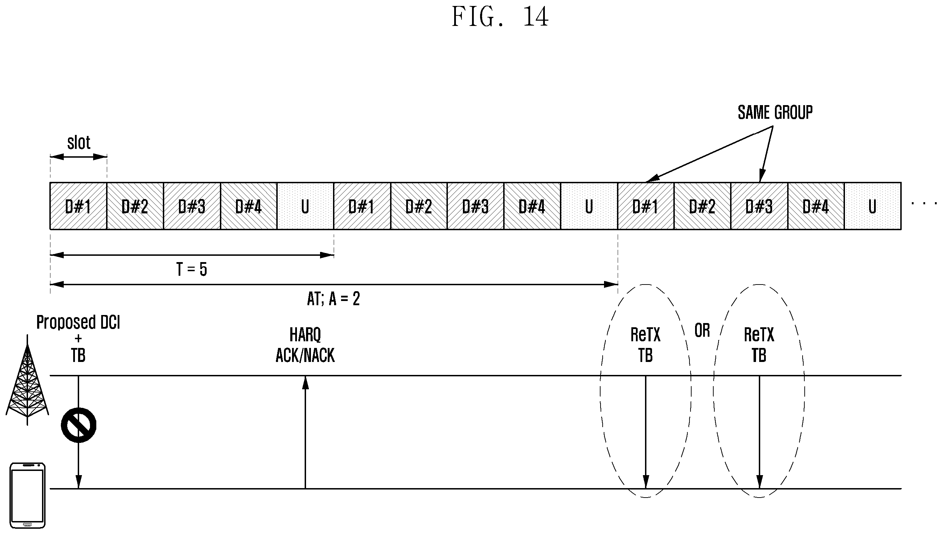

FIG. 14 is a diagram illustrating another embodiment of the present disclosure. Specifically, FIG. 14 is a diagram illustrating an example in which, when transmission fails in slot D#1 in performing Embodiment 6 and retransmission is performed in D#1 or D#3 having the same slot number or the same channel condition, the PDSCH transmission for retransmission is performed without the DCI, using only the DCI transmitted for the initial transmission. In FIG. 14, the DCI proposed in the present disclosure is indicated as "proposed DCI," and it is assumed that it is classified as a separate format from the existing DCI. Additionally, for convenience, slots having similar channel conditions are named the same group.

Similar to Embodiment 3, in the present embodiment, when the base station assigns resources for retransmission, it is assumed that the resource assignment in the time and frequency axes is the same as that of the initial transmission. The base station performs an operation of assigning retransmission in a slot within an announced group when the UE receives a NACK from the uplink resource transmitting HARQ ACK/NACK information, or when the UE fails to receive a HARQ ACK/NACK.

For the UE to operate as in the present embodiment, the following information is required.
a. Slot count period (T = 5 in the example of FIG. 10)
b. The location of the slot to which the retransmission is assigned when the initial transmission fails
c. The redundancy version (RV) to be used during the retransmission
d. Group information of slots having similar channel conditions

The pieces of information as described above may be configured using the RRC or via the DCI. In addition, some of the above pieces of information may be configured via the RRC and some of the pieces of information may be configured via the DCI. For convenience, the present embodiment will only describe the cases where all information is configured via the RRC and where all information is configured via the DCI.
- When configured via the RRC

When configured via the RRC, the information corresponding to a, b, and c may be configured.

The information b may be represented by various schemes. Based on the DCI transmission location, it may notify the total slot duration for the location where retransmission is assigned. This is represented as AT in FIG. 10. Alternatively, since the location where the retransmission is assigned will be multiple of information a, there is a method for configuring a coefficient that enables the UE to calculate in combination with information a. This corresponds to A in FIG. 10. In addition, based on the HARQ ACK/NACK location, similarly to the example in FIG. 10, it may be configured that retransmission is assigned after the BT slot, or only the coefficient B may be configured.

Information c may pre-configure the RV sequence when retransmission is performed. For example, when the retransmission RV is configured to 0231, the UE may identify the RV of the TB being retransmitted by looking at the corresponding information.

Information d may configure information corresponding to each group according to information a. The configured information may vary for each UE depending on the number of groups and the slots belonging to each group.

When configured via the RRC, an additional field referring to that the corresponding DCI operates as in the present embodiment is required in the DCI. Alternatively, it may operate in the same scheme as the present embodiment only when the RRC value proposed in the present embodiment is configured.
- When configured via the DCI

Similar to the case configured via the RRC, when the information a and b is configured via the DCI, additional fields should be newly defined. When the RRC has preconfigured RV values for all retransmissions, information c may refer to only the RV value corresponding to the immediately next retransmission in a field newly defined via the DCI, and all RVs may be preconfigured and provided as in RRC.

Additionally, information d can be configured in the newly defined field via the DCI and can be configured in various schemes. The information d may be configured in the form of notifying all slots constituting the same group as the group in which the initial transmission is performed. Since the UE does not know at which position within the group its retransmission data will arrive, there is an inefficiency in that the UE has to attempt decoding of the PDSCH after receiving the PDSCH in every slot. It is also possible to pre-configure specific slots within the corresponding group using a different scheme.

Additional RRC configuration is required to use the proposed DCI as in the present embodiment. Specifically, the additional RRC configuration for the redundancy version sequence for retransmission may be as follows.

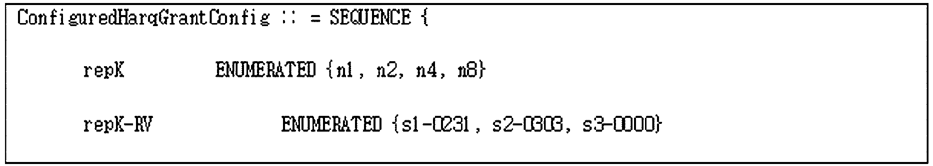

In the above description, repK may refer to the maximum configured number of times of retransmission, and repK-RV may refer to the RV sequence according to the number of times of retransmission. The proposed DCI should newly define a DCI format and deliver to the UE via the RRC configuration that the corresponding format may be transmitted via the search space configuration. When a new DCI format is not defined to use the proposed DCI, there is also a method for utilizing the existing format in terms of the search space, but defining an indicator to use the form of the proposed DCI format and delivering the indicator to the UE via the RRC.

### <Embodiment 7>

Embodiment 7 describes a retransmission method using reduced DCI in performing Embodiment 5.

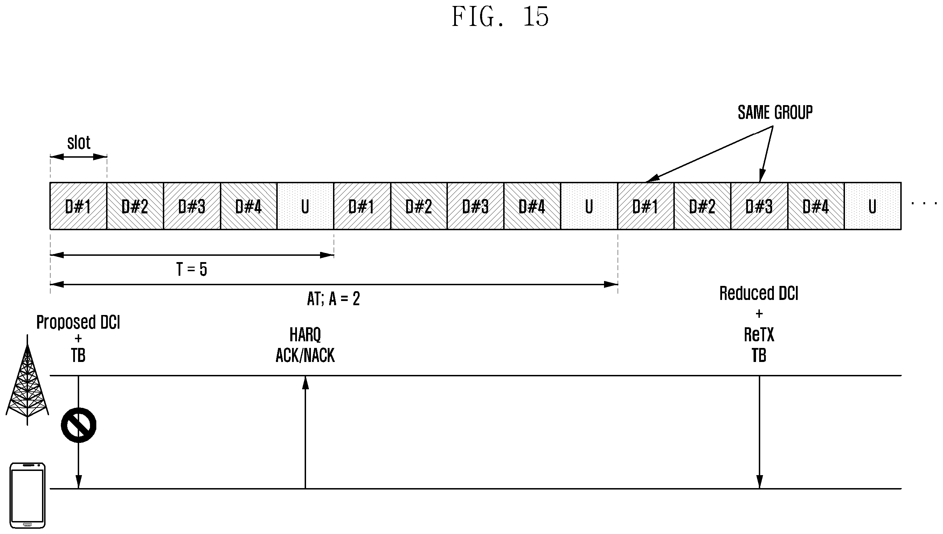

FIG. 15 is a diagram illustrating another embodiment of the present disclosure. Specifically, FIG. 15 is a diagram illustrating an example in which, when transmission fails in slot D#1 in performing Embodiment 7 and retransmission is performed in D#1 or D#3 having the same slot number or the same channel condition, the PDSCH transmission for retransmission is performed via the reduced DCI. In FIG. 15, the DCI used for initial transmission assignment proposed in the present disclosure is represented as the proposed DCI, and the DCI used for retransmission assignment is represented as the reduced DCI. It is assumed that both proposed DCIs are classified into formats separate from the transmitted existing DCI, etc., and are named in the above form for convenience.

Similar to Embodiment 4, in the present embodiment, when the base station assigns resources for retransmission, it is assumed that the resource assignment in the time and frequency axes is the same as that of the initial transmission. The base station performs an operation of assigning retransmission in a slot within an announced group when the UE receives a NACK from the uplink resource transmitting HARQ ACK/NACK information, or when the UE fails to receive a HARQ ACK/NACK.

For the UE to operate as in the present embodiment, the following information is required.
a. Slot count period (T = 5 in the example of FIG. 10)
b. The location of the slot to which the retransmission is assigned when the initial transmission fails
c. The redundancy version (RV) to be used during the retransmission
d. Group information of slots having similar channel conditions

The pieces of information as described above may be configured using the RRC or via the DCI. In addition, some of the above pieces of information may be configured via the RRC and some of the pieces of information may be configured via the DCI. For convenience, the present embodiment will only describe the cases where all information is configured via the RRC and where all information is configured via the DCI.
- When configured via the RRC

When configured via the RRC, the information corresponding to a, b, and c may be configured.

The information b may be represented by various schemes. Based on the DCI transmission location, it may notify the total slot duration for the location where retransmission is assigned. This is represented as AT in FIG. 10. Alternatively, since the location where the retransmission is assigned will be multiple of information a, there is a method for configuring a coefficient that enables the UE to calculate in combination with information a. This corresponds to A in FIG. 10. In addition, based on the HARQ ACK/NACK location, similarly to the example in FIG. 10, it may be configured that retransmission is assigned after the BT slot, or only the coefficient B may be configured.

Information c may pre-configure the RV sequence when retransmission is performed. For example, when the retransmission RV is configured to 0231, the UE may identify the RV of the TB being retransmitted by looking at the corresponding information.

Information d may configure information corresponding to each group according to information a. The configured information may vary for each UE depending on the number of groups and the slots belonging to each group.

When configured via the RRC, an additional field referring to that the corresponding DCI operates as in the present embodiment is required in the DCI. Alternatively, it may operate in the same scheme as the present embodiment only when the RRC value proposed in the present embodiment is configured.
- When configured via the DCI

Similar to the case configured via the RRC, when the information a and b is configured via the DCI, additional fields should be newly defined. When the RRC has preconfigured RV values for all retransmissions, information c may refer to only the RV value corresponding to the immediately next retransmission in a field newly defined via the DCI, and all RVs may be preconfigured and provided as in RRC.

Additionally, the information d can be configured in the newly defined field via the DCI and can be configured in various schemes. The information d may be configured in the form of notifying all slots constituting the same group as the group in which the initial transmission is performed. Since the UE does not know at which position within the group its retransmission data will arrive, there is inefficiency in that the UE has to attempt decoding of the PDSCH after receiving the PDSCH in every slot. It is also possible to pre-configure specific slots within the corresponding group using a different scheme.

Additional RRC configuration is required to use the proposed DCI as in the present embodiment. Specifically, the additional RRC configuration for the redundancy version sequence for retransmission may be as follows.

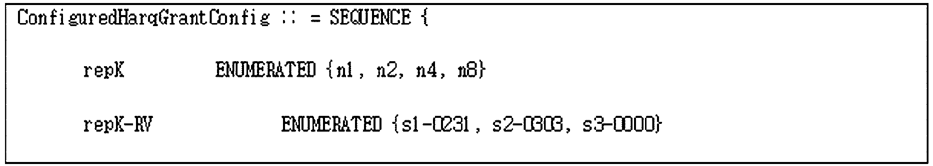

In the above description, repK may refer to the maximum configured number of times of retransmission, and repK-RV may refer to the RV sequence according to the number of times of retransmission. The proposed DCI should newly define a DCI format and deliver to the UE via the RRC configuration that the corresponding format may be transmitted via the search space configuration. When a new DCI format is not defined to use the proposed DCI, there is also a method for utilizing the existing format in terms of the search space, but defining an indicator to use the form of the proposed DCI format and delivering the indicator to the UE via the RRC.

The reduced DCI may include only the time axis resource assignment information and the frequency axis resource assignment information. The UE operated on the assumption that the UE has received the necessary information from the proposed DCI, as in the previous Embodiment 3. In this case, to perform the retransmission as in the present embodiment, the UE may identify the location of the slot in which the reduced DCI and the retransmission will occur via the proposed DCI. To check the reduced DCI at the corresponding location, a new format should be defined in the RRC. In addition, it should be delivered to the UE via the RRC that the newly defined format via the search space configuration may be delivered on the PDCCH.

In this case, since the reduced DCI includes less information compared to the existing technology, transmission can be performed using minimal PDCCH resources. For example, when N CCEs are required for the existing DCI transmission, M CCEs (M < N) are required for the reduced DCI, so the required amount of resources becomes M/N, and the PDCCH capacity increases by approximately N/M.

### <Embodiment 8>

Embodiment 8 describes the case where the UE fails the DCI decoding.

In the present embodiment, the case where the UE fails DCI may be classified into, during a given period, 1) a case where there is only one transmission, and 2) a case where there are a plurality of transmissions.
1) When there is only one transmission within a period, if the ACK/NACK itself is not received at the time the UE transmits the HARQ ACK/NACK, the base station may determine that the UE has failed DCI decoding and, instead of entering the retransmission process, operate to restart from the DCI transmission for the corresponding TB.
2) When there are a plurality of transmissions within a period, the UE usually transmits several TBs at once as the HARQ ACK/NACK, which is commonly referred to as an ACK codebook. In this case, even if there are transmissions that failed in the middle or transmissions for which the DCI decoding failed, the UE may still determine the total number of transmissions and which transmission number the current TB corresponds to. Therefore, the UE can record and transmit the NACK even if the DCI decoding fails. To address this issue, two schemes are possible. First, for all transmissions determined to be NACK, there is a scheme to restart transmission from the DCI transmission for the corresponding TB, as in the case where there is only one transmission within the period. In addition, secondly, there is a method for the UE to provide additional information for NACK entries in an ACK codebook to transmit information regarding whether the NACK is due to a DCI decoding failure or due to a TB decoding failure despite successful DCI decoding. In this case, the base station only needs to restart the transmission from the DCI for the corresponding transmission. Therefore, the method enables more efficient operation compared to the first method.

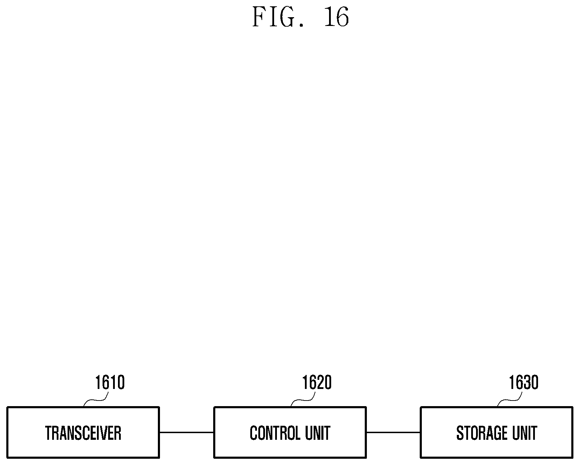

FIG. 16 is a diagram illustrating a structure of a terminal according to an embodiment of the present disclosure.

Referring to FIG. 16, the terminal may include a transceiver 1610, a control unit 1620, and a storage unit 1630. In the present disclosure, the control unit may be defined as a circuit, an application-specific integrated circuit, or at least one processor.

The transceiver 1610 may transmit and receive signals to and from other network entities. The transceiver 1610 may receive, for example, system information from the base station, and receive a synchronization signal or a reference signal.

The control unit 1620 may control the overall operation of the terminal according to an embodiment proposed in the present disclosure. For example, the control unit 1620 may control a signal flow between each block to perform operations according to the flowchart described above.

The storage unit 1630 may store at least one of the information transmitted and received through the transceiver 1610 and the information generated by the control unit 1620.

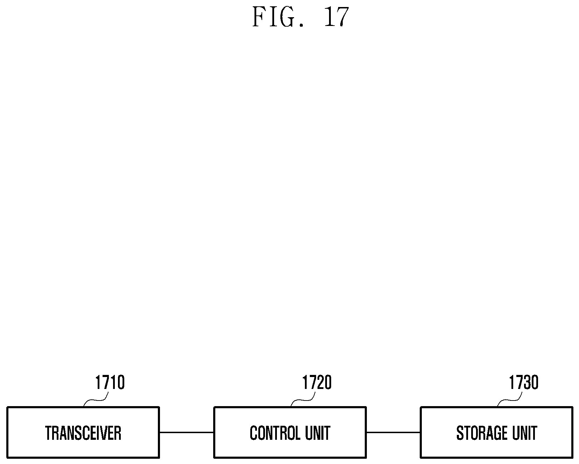

FIG. 17 is a diagram illustrating a structure of a base station according to an embodiment of the present disclosure.

Referring to FIG. 17, the base station may include a transceiver 1710, a control unit 1720, and a storage unit 1730. In the present disclosure, the control unit may be defined as a circuit, an application-specific integrated circuit, or at least one processor.

The transceiver 1710 may transmit and receive signals to and from other network entities. The transceiver 1710 may transmit, for example, system information to the terminal, and transmit a synchronization signal or a reference signal.

The control unit 1720 may control the overall operation of the base station according to an embodiment proposed in the present disclosure. For example, the control unit 1720 may control a signal flow between each block to perform operations according to the flowchart described above. Specifically, the control unit 1720 may control operations proposed in the present disclosure in order to transmit remaining minimum system information (RMSI) in a multi-beam-based system according to an embodiment of the present disclosure.

The storage unit 1730 may store at least one of the information transmitted and received through the transceiver 1710 and the information generated by the control unit 1720.

## Claims

1. A method performed by a base station in a wireless communication system, the method comprising:
transmitting, to a terminal, first downlink control information (DCI) and a transport block (TB);
transmitting, to the terminal, the transport block (TB) based on the first DCI;
receiving, from the terminal, a hybrid automatic repeat request (HARQ) feedback in case that the transmission of the transport block fails; and
retransmitting, to the terminal, the transport block based on the HARQ feedback,
wherein the first downlink control information comprises at least one of a slot number counting period, a retransmission time domain resource coefficient, and redundancy version (RV) information for retransmission.

2. The method of claim 1, further comprising:
transmitting a radio resource control (RRC) message comprising a maximum configured number of times of retransmission related to the RV information for the retransmission and an RV sequence according to the number of times of retransmission.

3. The method of claim 1, further comprising:
transmitting, to the terminal, second downlink control information based on the HARQ feedback,
wherein the second downlink control information comprises only time domain resource assignment and frequency domain resource assignment.

4. The method of claim 1, wherein the retransmitting of the transport block further comprises:
grouping a plurality of slots slots having similar channel conditions into a group; and
retransmitting the transport block in a slot belonging to the same group as a slot in which the transport block was transmitted, and
wherein the first downlink control information further comprises group information and slot information for the group.

5. A method performed by a terminal in a wireless communication system, the method comprising:
receiving, from a base station, first downlink control information (DCI);
receiving, from the base station, a transport block (TB) based on the first DCI;
transmitting, to the base station, a hybrid automatic repeat request (HARQ) feedback in case that the reception of the transport block fails; and
re-receiving, from the base station, the transport block based on the HARQ feedback,
wherein the first downlink control information comprises at least one of a slot number counting period, a retransmission time domain resource coefficient, and redundancy version (RV) information for retransmission.

6. The method of claim 5, further comprising:
receiving a radio resource control (RRC) message comprising a maximum configured number of times of retransmission related to the RV information for the retransmission and an RV sequence according to the number of times of retransmission.

7. The method of claim 5, further comprising:
receiving, from the base station, second downlink control information based on the HARQ feedback,
wherein the second downlink control information comprisees only time domain resource assignment and frequency domain resource assignment.

8. The method of claim 5, wherein the re-receiving of the transport block further comprises:
grouping a plurality of slots slots having similar channel conditions into a group; and
re-receiving the transport block in a slot belonging to the same group as a slot in which the transport block was received, and
wherein the first downlink control information further comprises group information and slot information for the group.

9. A base station in a wireless communication system, comprising:
a transceiver transmitting and receiving at least one signal; and
a control unit connected to the transceiver,
wherein the control unit is configured to:
transmit, to a terminal, first downlink control information (DCI) and a transport block (TB);
transmit, to the terminal, the transport block (TB) based on the first DCI;
receive, from the terminal, a hybrid automatic repeat request (HARQ) feedback in case that the transmission of the transport block fails; and
retransmit, to the terminal, the transport block based on the HARQ feedback, and
the first downlink control information comprises at least one of a slot number counting period, a retransmission time domain resource coefficient, and redundancy version (RV) information for retransmission.

10. The base station of claim 9, wherein the control unit is further configured to transmit a radio resource control (RRC) message comprising a maximum configured number of times of retransmission related to the RV information for the retransmission and an RV sequence according to the number of times of retransmission.

11. The base station of claim 9, wherein the control unit is further configured to transmit, to the terminal, second downlink control information based on the HARQ feedback,
wherein the second downlink control information comprises only time domain resource assignment and frequency domain resource assignment.

12. The base station of claim 9, wherein the control unit is further configured to:
group a plurality of slots slots having similar channel conditions into a group; and
retransmit the transport block in a slot belonging to the same group as a slot in which the transport block was transmitted, and
wherein the first downlink control information further comprises group information and slot information for the group.

13. A terminal in a wireless communication system, comprising:
a transceiver transmitting and receiving at least one signal; and
a control unit connected to the transceiver,
wherein the control unit is configured to:
receive, from a base station, first downlink control information (DCI);
receive, from the base station, a transport block (TB) based on the first DCI;
transmit, to the base station, a hybrid automatic repeat request (HARQ) feedback in case that the reception of the transport block fails; and
re-receive, from the base station, the transport block based on the HARQ feedback, and
the first downlink control information comprises at least one of a slot number counting period, a retransmission time domain resource coefficient, and redundancy version (RV) information for retransmission.

14. The terminal of claim 13, wherein the control unit is further configured to receive a radio resource control (RRC) message comprising a maximum configured number of times of retransmission related to the RV information for the retransmission and an RV sequence according to the number of times of retransmission.

15. The terminal of claim 13, wherein the control unit is further configured to receive, from the base station, second downlink control information based on the HARQ feedback,
wherein the second downlink control information comprises only time domain resource assignment and frequency domain resource assignment,
wherein the control unit is further configured to group a plurality of slots slots having similar channel conditions into a group, and re-receive the transport block in a slot belonging to the same group as a slot in which the transport block was received, and
wherein the first downlink control information further comprises group information and slot information for the group.
